# EUROPEAN PATENT APPLICATION

(11) **EP 4 842 029 A1**
(43) Date of publication of application: **18.11.2026**
(21) Application number: 24923366.9
(22) Date of filing: 10.10.2024
(51) Int. Cl.: H04W 12/06

(54) **AUTHENTICATION METHOD, COMMUNICATION APPARATUS, STORAGE MEDIUM, AND COMPUTER PROGRAM PRODUCT**

(30) Priority: 08.02.2024 CN 202410178162
(71) Applicant: ZTE Corporation, Shenzhen, Guangdong 518057 (CN)
(72) Inventor: LIU, Yuze, Shenzhen, Guangdong 518057 (CN); XING, Zhen, Shenzhen, Guangdong 518057 (CN); YOU, Shilin, Shenzhen, Guangdong 518057 (CN); LIU, Peilin, Shenzhen, Guangdong 518057 (CN); ZHANG, Leyi, Shenzhen, Guangdong 518057 (CN); MA, Wei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/123909
(87) International publication number: WO 2025/167162

(57) **Abstract**

Embodiments of the present disclosure provide an authentication method, a communication apparatus, a storage medium, and a computer program product. The authentication method comprises: receiving a first message sent by a second access management network element, wherein the first message is used for requesting a first access management network element to provide a service for a terminal, and the second access management network element belongs to a second network; on the basis of the first message, determining the authentication status of the terminal; and on the basis that the authentication status meets a preset authentication status, triggering an authentication process of the terminal in a first network.

## Description

The present disclosure claims priority to Chinese Patent Application No. 202410178162.8 filed on February 8, 2024, the entire contents of which are incorporated herein by reference.

### TECHNICAL FIELD

The present disclosure relates to the technical field of communications, and in particular, to an authentication method, a communication apparatus, a storage medium, and a computer program product.

### BACKGROUND

Currently, a terminal accessing a non-public network may be registered and authenticated through the non-public network when the non-public network is disconnected from an operator network, and directly access the operator network after the non-public network is connected to the operator network.

### SUMMARY

In an aspect, there is provided an authentication method, applied to a first access management network element. The authentication method includes: receiving a first message sent from a second access management network element, where the first message is used to request that the first access management network element provides a service for a terminal, and the second access management network element belongs to a second network; determining an authentication condition of the terminal based on the first message; and triggering an authentication process of the terminal in a first network based on the authentication condition being that the terminal completes authentication in the second network or does not complete authentication in the first network.

In another aspect, there is provided an authentication apparatus, applied to a first access management network element. The authentication apparatus includes: a receiving module, a determination module, and a processing module. The receiving module is configured to receive a first message sent from a second access management network element, where the first message is used to request that the first access management network element provides a service for a terminal, and the second access management network element belongs to a second network. The determination module is configured to determine an authentication condition of the terminal based on the first message. The processing module is configured to, based on the authentication condition being that the terminal completes authentication in the second network or does not complete authentication in the first network, trigger an authentication process of the terminal in the first network.

In yet another aspect, there is provided an authentication method, applied to a second access management network element, where the second access management network element belongs to a second network, and the authentication method includes: sending a first message to a first access management network element, where the first message is used to request that the first access management network element provides a service for a terminal; and receiving a second message sent from the first access management network element, where the second message is a response message to the first message.

In yet another aspect, there is provided an authentication apparatus, applied to a second access management network element, where the second access management network element belongs to a second network, and the authentication apparatus includes: a sending module and a receiving module. The sending module is configured to send a first message to a first access management network element, where the first message is used to request that the first access management network element provides a service for a terminal. The receiving module is configured to receive a second message sent from the first access management network element, where the second message is a response message to the first message.

In yet another aspect, there is provided a communication apparatus, where the communication apparatus includes: a memory and a processor. The memory is coupled to the processor; the memory is configured to store a computer program; and the processor, upon executing the computer program, implements the authentication method described above.

In yet another aspect, there is provided a computer-readable storage medium, where the computer-readable storage medium has computer program instructions stored thereon, and the computer program instructions, upon being executed by a processor, implement the authentication method described above.

In yet another aspect, there is provided a computer program product, where the computer program product includes computer program instructions, and the computer program instructions, upon being executed by a processor, implement the authentication method described above.

The embodiments of the present disclosure provide an authentication solution, where a first access management network element may receive a first message sent from a second access management network element, where the first message is used to request that the first access management network element provides a service for a terminal, and the second access management network element belongs to a second network; the first access management network element determines the authentication condition of the terminal based on the first message, and based on the authentication condition being that the terminal completes authentication in the second network. In this way, when the terminal only completes authentication in the second network, the first access management network element also carries out an authentication process in the first network for the terminal before providing the service for the terminal. Therefore, an authentication process for the terminal in the first network is triggered not only when the terminal is not authenticated by the first network, but also when the terminal is authenticated by the second network, thereby avoiding a security risk to the first network caused by the first access management network element directly providing the service for the terminal when the terminal authenticated by the second network is an abnormal terminal, and further more reliably ensuring the network security of the first network.

### BRIEF DESCRIPTION OF THE DRAWINGS

In order to more clearly describe the technical solutions in the present disclosure, the accompanying drawings which are needed to be used in some embodiments of the present disclosure will be briefly introduced below. Obviously, the accompanying drawings in the following description are merely some embodiments of the present disclosure, and for those of ordinary skill in the art, other accompanying drawings may also be obtained according to these accompanying drawings.
FIG. 1 is a system architecture diagram according to some embodiments of the present disclosure.
FIG. 2 is another system architecture diagram according to some embodiments of the present disclosure.
FIG. 3 is a schematic flowchart of an authentication method according to some embodiments of the present disclosure.
FIG. 4 is a schematic flowchart of another authentication method according to some embodiments of the present disclosure.
FIG. 5 is a schematic flowchart of yet another authentication method according to some embodiments of the present disclosure.
FIG. 6 is a schematic flowchart of yet another authentication method according to some embodiments of the present disclosure.
FIG. 7 is a schematic flowchart of yet another authentication method according to some embodiments of the present disclosure.
FIG. 8 is a schematic flowchart of yet another authentication method according to some embodiments of the present disclosure.
FIG. 9 is a schematic flowchart of yet another authentication method according to some embodiments of the present disclosure.
FIG. 10 is a schematic flowchart of yet another authentication method according to some embodiments of the present disclosure.
FIG. 11 is a schematic flowchart of yet another authentication method according to some embodiments of the present disclosure.
FIG. 12 is a schematic flowchart of yet another authentication method according to some embodiments of the present disclosure.
FIG. 13 is a schematic flowchart of yet another authentication method according to some embodiments of the present disclosure.
FIG. 14 is a schematic flowchart of yet another authentication method according to some embodiments of the present disclosure.
FIG. 15 is a schematic flowchart of yet another authentication method according to some embodiments of the present disclosure.
FIG. 16 is a schematic flowchart of yet another authentication method according to some embodiments of the present disclosure.
FIG. 17 is a structural schematic diagram of an authentication apparatus according to some embodiments of the present disclosure.
FIG. 18 is a structural schematic diagram of another authentication apparatus according to some embodiments of the present disclosure.
FIG. 19 is a structural schematic diagram of a communication apparatus according to some embodiments of the present disclosure.

### DETAILED DESCRIPTION

The technical solutions in the present disclosure will be clearly and completely described below with reference to the accompanying drawings in the present disclosure. Obviously, the described embodiments are only a part of the embodiments of the present disclosure, but not all the embodiments of the present disclosure. Based on the embodiments in the present disclosure, all other embodiments obtained by those of ordinary skill in the art without creative efforts shall fall within the scope of protection of the present disclosure.

It should be noted that, in the present disclosure, words such as "exemplarily" or "for example" are used to describe examples, illustrations or explanations. Any embodiment or design solution described with words such as "exemplarily" or "for example" in the present disclosure should not be construed as being more preferred or more advantageous than other embodiments or design solutions. Exactly speaking, the usage of words such as "exemplarily" or "for example" is intended to present related concepts in a specific manner.

Hereinafter, terms such as "first" and "second" are used for descriptive purposes only, and cannot be understood as indicating or implying relative importance or implicitly indicating the number of the technical features indicated. Thus, features defined with "first", "second" and the like may explicitly or implicitly include one or more of the features.

In the description of the present disclosure, unless otherwise specified, "/" means "or", for example, A/B may represent A or B. Herein, "and/or" is only used to describe the association relationship of associated objects, and indicates that three relationships may exist. For example, A and/or B may indicate: A existing alone, A and B existing simultaneously, and B existing alone. In addition, "at least one" means one or more, and "plurality of/multiple" means two or more.

Currently, a non-public network (NPN) and a public land mobile network (PLMN) exist in related network architectures. A non-public network is a dedicated mobile communication network constructed for a specific organization or enterprise. The non-public network has independent network elements and can independently complete all services for a user terminal to access the non-public network. Meanwhile, the non-public network may establish a connection with the public land mobile network. Furthermore, the user terminal accessing the non-public network may access the public land mobile network.

When accessing a service, a user terminal needs to perform registration and authentication in order to have access permission for the service. At this time, when the non-public network may establish a connection with the public land mobile network, the user terminal completes the registration and authentication through the public land mobile network. When the non-public network is disconnected from the public land mobile network, the user terminal may complete the registration and authentication through the non-public network, and after the registration and authentication is completed, the user terminal may access the service through the non-public network or the public land mobile network.

However, in the above method, the user terminal that has passed the registration and authentication of the non-public network may be an abnormal user terminal, that is, the user terminal has passed the registration and authentication of the non-public network by abnormal means. At this time, the abnormal user terminal has the access permission to the public land mobile network, which may bring security risks to the public land mobile network.

In order to solve the above problem, the embodiments of the present disclosure provide an authentication method, where a first access management network element may receive a first message sent from a second access management network element, the first message is used to request that the first access management network element provides a service for a terminal, and the second access management network element belongs to a second network; the first access management network element determines an authentication condition of the terminal based on the first message; and triggers an authentication process of the terminal in the first network based on the authentication condition being that the terminal completes authentication in the first network. In this way, when the terminal only completes authentication in the second network, the first access management network element also carries out an authentication process in the first network for the terminal before providing the service for the terminal. Therefore, the authentication process for the terminal in the first network is triggered not only when the terminal is not authenticated by the first network, but also when the terminal is authenticated by the second network, thereby avoiding a security risk to the first network caused by the first access management network element directly providing the service for the terminal when the terminal authenticated by the second network is an abnormal terminal, and further more reliably ensuring the network security of the first network.

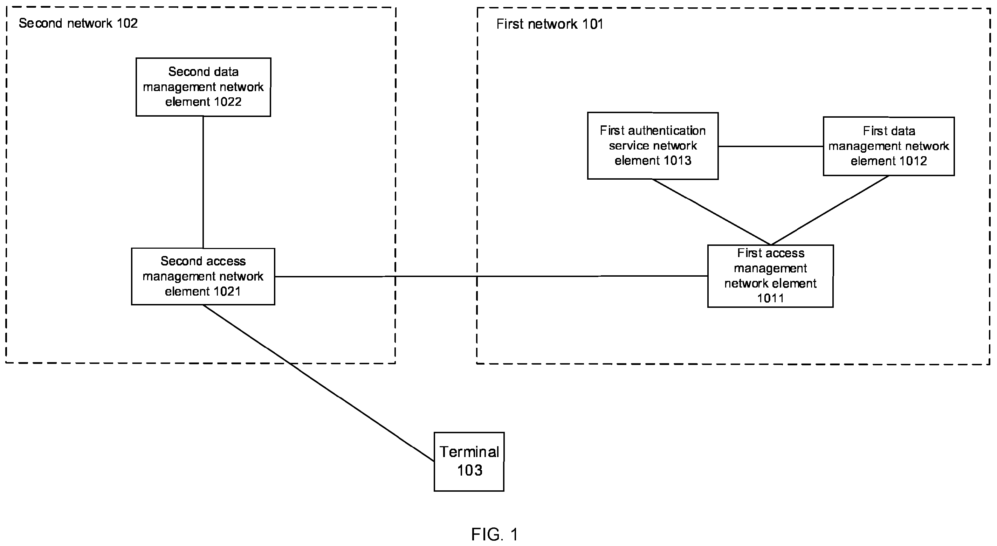

The authentication method provided by the embodiments of the present disclosure may be applied to the communication system as shown in FIG. 1. As shown in FIG. 1, the communication system includes: a first network 101, a second network 102, a terminal 103, a first access management network element 1011, a first data management network element 1012, a first authentication service network element 1013, a second access management network element 1021, and a second data management network element 1022.

The first network 101 includes the first access management network element 1011, the first data management network element 1012, and the first authentication service network element 1013, and the second network 102 includes the second access management network element 1021 and the second data management network element 1022.

In the embodiments of the present disclosure, the first access management network element 1011 may receive a first message sent from the second access management network element 1021. Then the first access management network element 1011 may determine the authentication condition of the terminal 103 based on the first message, and based on the authentication condition satisfying a preset authentication condition, trigger an authentication process of the terminal 103 in the first network 101, so that the first network 101 provides the service for the terminal 103 when the terminal has the access permission to the first network 101, thereby ensuring the network security of the first network 101.

The first data management network element 1012 may store the authentication status of the terminal 103 in the first network 101. The first access management network element 1011 may query the authentication status of the terminal 103 in the first network 101 from the first data management network element 1012. The first authentication service network element 1013 may also query the authentication status of the terminal 103 in the first network 101. The second data management network element 1022 may store the authentication status of the terminal 103 in the second network 102. The second access management network element 1021 may query the authentication status of the terminal 103 in the second network 102 from the second data management network element 1022.

In an exemplary implementation, the above first network 101 may be a public land mobile network, the above second network 102 may be a non-public network, the above first access management network element 1011 or second access management network element 1021 may be an access and mobility management function (AMF) network element, the first data management network element 1012 or the second data management network element 1022 may be a unified data management (UDM) network element, and the first authentication service network element 1013 may be an authentication server function (AUSF) network element.

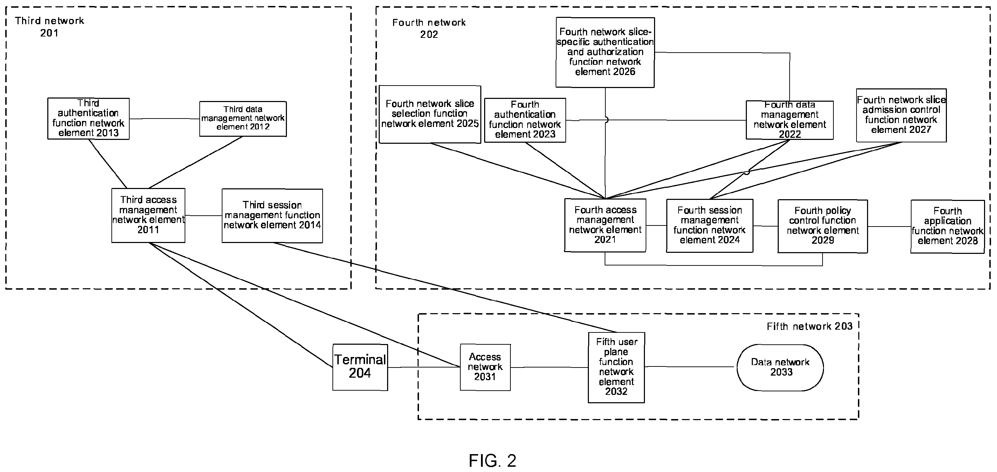

In some embodiments, the above authentication method may also be applied to the communication system as shown in FIG. 2. As shown in FIG. 2, the communication system includes a third network 201, a fourth network 202, a fifth network 203, and a terminal 204. The third network 201 includes a third access management network element 2011, a third data management network element 2012, a third authentication function network element 2013, and a third session management function (SMF) network element 2014. The fourth network includes a fourth access management network element 2021, a fourth data management network element 2022, a fourth authentication function network element 2023, a fourth session management function network element 2024, a fourth network slice selection function (NSSF) network element 2025, a fourth network slice-specific authentication and authorization function (NSSAAF) network element 2026, a fourth network slice admission control function (NSACF) network element 2027, a fourth application function (AF) network element 2028, and a fourth policy control function (PCF) network element 2029. The fifth network 203 includes an access network (AN) 2031, a fifth user plane function (UPF) network element 2032, and a data network (DN) 2033.

The third access management network element 2011 is connected to the third data management network element 2012, the third authentication function network element 2013, the third session management function network element 2014, the terminal 204, and the access network 2031. The third data management network element 2012 is connected to the third authentication function network element 2013 and the third access management network element 2011. The third session management function network element 2014 is connected to the fifth user plane function network element 2032. The terminal 204 is also connected to the access network 2031. The access network 2031 is also connected to the fifth user plane function network element 2032. The fifth user plane function network element 2032 is also connected to the data network 2033. The fourth access management network element 2021 is connected to the fourth data management network element 2022, the fourth authentication function network element 2023, the fourth session management function network element 2024, the fourth network slice selection function network element 2025, the fourth network slice-specific authentication and authorization function network element 2026, the fourth network slice admission control function network element 2027, and the fourth policy control function network element 2029. The fourth data management network element 2022 is also connected to the fourth authentication function network element 2023, the fourth session management function network element 2024, and the fourth network slice-specific authentication and authorization function network element 2026. The fourth session management function network element 2024 is also connected to the fourth network slice admission control function network element 2027 and the fourth policy control function network element 2029. The fourth policy control function network element 2029 is also connected to the fourth application function network element 2028.

The third access management network element 2011 is configured to provide an access and management service for the terminal 204, and send a message to the fourth access management network element 2021 to request the fourth access management network element 2021 to provide a service for the terminal 204.

The third data management network element 2012 is configured to store an authentication status of the terminal 204 on the third network.

The third authentication function network element 2013 is configured to query the authentication status of the terminal 204 in the third network 201 from the third data management network element 2012.

The third session management function network element 2014 is configured to perform session management and route user plane data.

The fourth access management network element 2021 is configured to query the authentication status of the terminal 204 in the third network 201 from the third data management network element 2012, or query the authentication status of the terminal 204 in the fourth network from the fourth data management network element 2022.

The fourth data management network element 2022 is configured to store the authentication status of the terminal 204 in the fourth network.

The fourth authentication function network element 2023 is configured to query the authentication status of the terminal 204 in the fourth network from the fourth data management network element 2022.

The fourth session management function network element 2024 is configured to allocate an IP (Internet Protocol) address for the terminal 204, and manage various channels between the terminal 204 and a core network.

The fourth network slice selection function network element 2025 is configured to determine network slices accessible by the terminal 204 based on slice selection assistance information, subscription information, and the like.

The fourth network slice-specific authentication and authorization function network element 2026 is configured to implement separate authentication and authorization for each network slice.

The fourth network slice admission control function network element 2027 is configured to: monitor and control a number of registered terminals on each network slice; monitor and control a number of sessions established for each network slice; and generate a network slice usage report based on event-based network slice state notification.

The fourth application function network element 2028 is configured to interact with the fourth policy control function network element 2029 and provide business services.

The fourth policy control function network element 2029 is configured to manage network behavior and provide policy rules.

The access network 2031 is configured to enable the terminal 204 to access a core network element.

The fifth user plane function network element 2032 is configured to route data sent from the terminal to the third network 201.

The data network 2033 is configured to carry and transmit various forms of data traffic.

In some embodiments, the above access network 2031 may be a radio access network (RAN).

The application scenarios of the embodiments of the present disclosure are not limited. The system architecture and service scenarios described in the embodiments of the present disclosure are for the purpose of more clearly illustrating the technical solutions of the embodiments of the present disclosure, and do not constitute a limitation on the technical solutions provided by the embodiments of the present disclosure. Those of ordinary skill in the art may know that, with the evolution of network architectures and the emergence of new service scenarios, the technical solutions provided by the embodiments of the present disclosure are also applicable to similar technical problems.

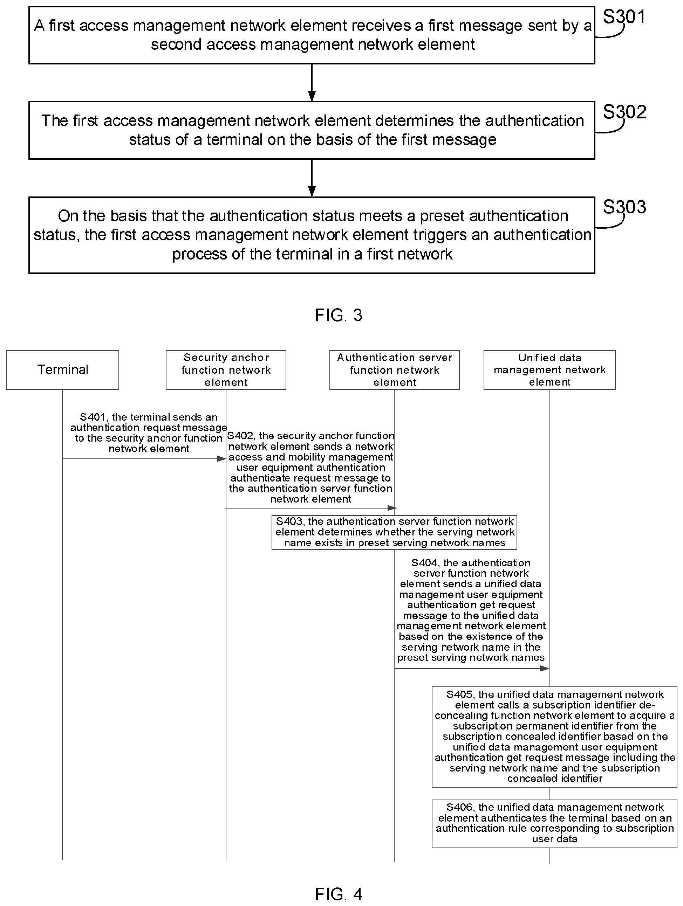

The authentication method provided by the embodiments of the present disclosure may be applied to the first access management network element 1011 or the fourth access management network element 2021 in the communication system shown in FIG. 1 or FIG. 2. FIG. 3 proposes a schematic flowchart of an authentication method. As shown in FIG. 3, the authentication method at least includes the following S301 to S303.

In S301: a first access management network element receives a first message sent from a second access management network element.

The first message is used to request that the first access management network element provide a service for a terminal. The second access management network element belongs to a second network.

It should be understood that the terminal accesses the second network and is provided with a service by the second access management network element. When the terminal needs to be switched to be provided with a service by the first access management network element, the second access management network element sends the first message to the first access management network element to request the first access management network element to provide the service for the terminal.

In S302: the first access management network element determines an authentication condition of the terminal based on the first message.

It should be understood that, before the first access management network element provides the service for the terminal, the first access management network element needs to determine whether there is a security risk in providing the service for the terminal. At this time, the first access management network element determines the authentication condition of the terminal.

It can be understood that, since the first message is used to request that the first access management network element provides the service for the terminal, the first message plays a role of identifying the terminal. That is, the first access management network element may determine the terminal based on the first message, and further, the first access management network element may determine the authentication condition of the terminal based on the first message.

In S303: the first access management network element triggers an authentication process of the terminal in a first network based on the authentication condition satisfying a preset authentication condition.

It should be understood that, in the case where the first access management network element determines that the authentication condition satisfies the preset authentication condition, it indicates that the terminal needs to go through the authentication process in the first network.

It can be understood that, after the terminal goes through the authentication process in the first network, the first access management network element may determine whether the terminal has an authority to be served by the first access management network element.

In an exemplary implementation, after the first access management network element determines that the terminal passes the authentication process in the first network and the terminal has the authority to be served by the first access management network element, the first access management network element may provide the service for the terminal. Therefore, before the first access management network element may provide the service for the terminal, it is necessary for the first access management network element to trigger the authentication process of the terminal in the first network.

In the embodiments of the present disclosure, the first access management network element receives the first message sent from the second access management network element, determines the authentication condition of the terminal based on the first message, and triggers the authentication process of the terminal in the first network based on the authentication condition satisfying the preset authentication condition. Since the first message is for requesting the first access management network element to provide the service for the terminal, the first access management network element needs to determine the authentication condition of the terminal. In the case where the authentication request satisfies the preset authentication condition, it indicates that the first access management network element cannot determine whether there is a security risk in providing the service for the terminal. At this time, the first access management network element triggers the authentication process of the terminal in the first network. In this way, through the authentication process of the terminal in the first network, a network security risk caused by the first access management network element providing the service for an abnormal terminal when the terminal may be an abnormal terminal is avoided, thereby reliably ensuring the network security of the first network.

As shown in FIG. 4, in an exemplary implementation, the authentication process of the terminal in the first network includes: S401 to S406.

In S401: the terminal sends an authentication request message to a security anchor function (SEAF) network element.

The authentication request message includes a subscription concealed identifier (SUCI) (or a 5G (5th Generation Mobile Communication Technology) globally unique temporary identifier (5G-GUTI). The 5G globally unique temporary identifier may include the subscription concealed identifier or a subscription permanent identifier (SUPI)).

In S402: the security anchor function network element sends a network access and mobility management user equipment (UE) authentication authenticate request (Nausf UE authentication authenticate request) message to an authentication server function network element.

The network access and mobility management terminal authentication authenticate request message includes a serving network name and the subscription concealed identifier (or the serving network name and the subscription permanent identifier).

In S403: the authentication server function network element determines whether the serving network name exists in preset serving network names.

In S404: the authentication server function network element sends a unified data management user equipment authentication get request message (Nudm UE authentication get request) to a unified data management network element based on the existence of the serving network name in the preset serving network names.

In an implementation, based on the non-existence of the serving network name in the preset serving network names, the authentication server function network element sends a network access and mobility management user equipment authentication authenticate response (Nausf UE authentication authenticate response) message to the security anchor function network element.

The unified data management user equipment authentication get request message includes the serving network name and the subscription concealed identifier. The network access and mobility management user equipment authentication authenticate response message includes "unauthorized serving network" information.

In S405: the unified data management network element calls a subscription identifier de-concealing function (SIDF) network element to acquire the subscription permanent identifier from the subscription concealed identifier based on the unified data management user equipment authentication get request message including the serving network name and the subscription concealed identifier.

In S406: the unified data management network element authenticates the terminal based on an authentication rule corresponding to subscription user data.

In an implementation, based on the unified data management user equipment authentication get request message including the serving network name and the subscription permanent identifier, the unified data management network element determines an authentication rule corresponding to the subscription user data, and authenticates the terminal based on the authentication rule.

In some embodiments, the unified data management network element in the authentication process of the terminal in the first network may also be replaced by an authentication credential repository and processing function (ARPF) network element.

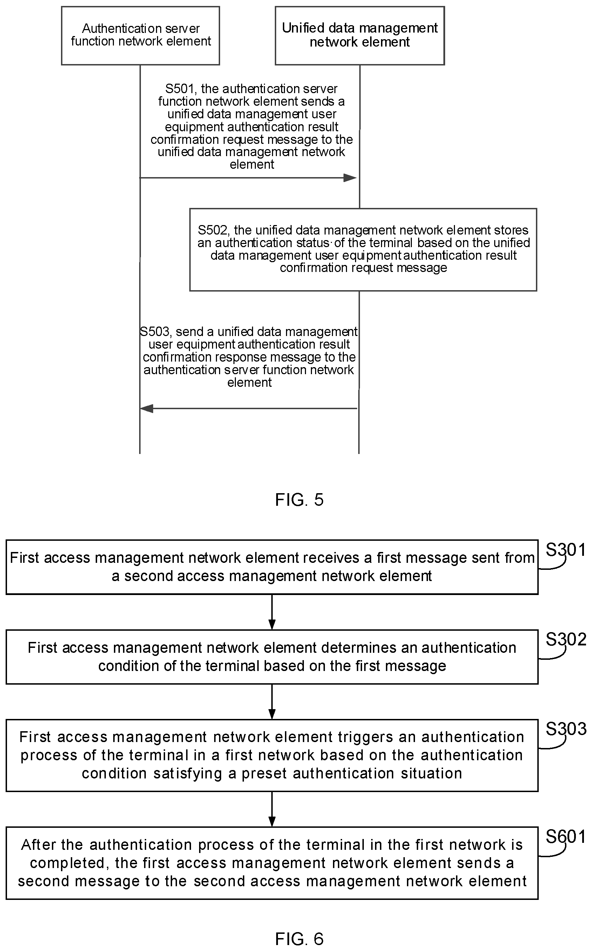

In some embodiments, after the authentication process of the terminal in the first network or during the authentication process of the terminal in the first network, an authentication result determination process for the terminal is further included. As shown in FIG. 5, the authentication result determination process for the terminal includes: S501 to S503.

In S501: the authentication server function network element sends a unified data management user equipment authentication result confirmation request message (Nudm UE authentication result confirmation request) to the unified data management network element.

In S502: the unified data management network element stores the authentication status of the terminal based on the unified data management user equipment authentication result confirmation request message.

In S503: the unified data management network element sends a unified data management user equipment authentication result confirmation response message (Nudm UE authentication result confirmation response) to the authentication server function network element.

With reference to FIG. 3, as shown in FIG. 6, the authentication method provided by the embodiments of the present disclosure further includes S601.

In S601: after the authentication process of the terminal in the first network is completed, the first access management network element sends a second message to the second access management network element.

The second message is a response message to the first message.

It should be understood that the second message may indicate that the terminal passes the authentication of the first network or does not pass the authentication of the first network.

It can be understood that, since the first message is for the second access management network element to request the first access management network element to provide the service for the terminal, after the authentication process of the terminal in the first network is completed, the second message may be sent to the second access management network element, so that the second access management network element determines whether the first access management network element can provide the service for the terminal.

In some embodiments, the authentication status information of the terminal in the second network is stored in the second data management network element, and based on receiving the second message, the second access management network element sends an authentication status information deletion request to the second data management network element. The second data management network element deletes the authentication status information of the terminal in the second network based on the authentication status information.

In the embodiments of the present disclosure, after the authentication process of the terminal in the first network is completed, the first access management network element sends the second message to the second access management network element, so that the second access management network element determines whether the first access management network element can provide the service for the terminal, so that the second access management network element may send to the terminal: whether the request for the first access management network element to provide the service is successful, so as to complete an information interaction process between the terminal and the second access management network element and information interaction between the second access management network element and the second data management network element.

The above determination of the authentication condition of the terminal by the first access management network element based on the first message may be implemented in multiple manners, and the multiple manners will be described below. For example, the multiple manners may include the following five manners: Manner 1: determining the authentication condition of the terminal when a first authentication indication included in the first message indicates that the terminal completes authentication in the second network; Manner 2: determining the authentication condition of the terminal based on the first data management network element when the first message does not include the first authentication indication; Manner 3: determining the authentication condition of the terminal based on the second data management network element when the first message does not include the first authentication indication; Manner 4: determining the authentication condition of the terminal based on the first data management network element when the first authentication indication indicates that the terminal completes authentication in the first network; Manner 5: determining the authentication condition of the terminal based on the first authentication service network element when the first authentication indication indicates that the terminal completes authentication in the first network.

Manner 1: determining the authentication condition of the terminal when the first authentication indication indicates that the terminal completes authentication in the second network.

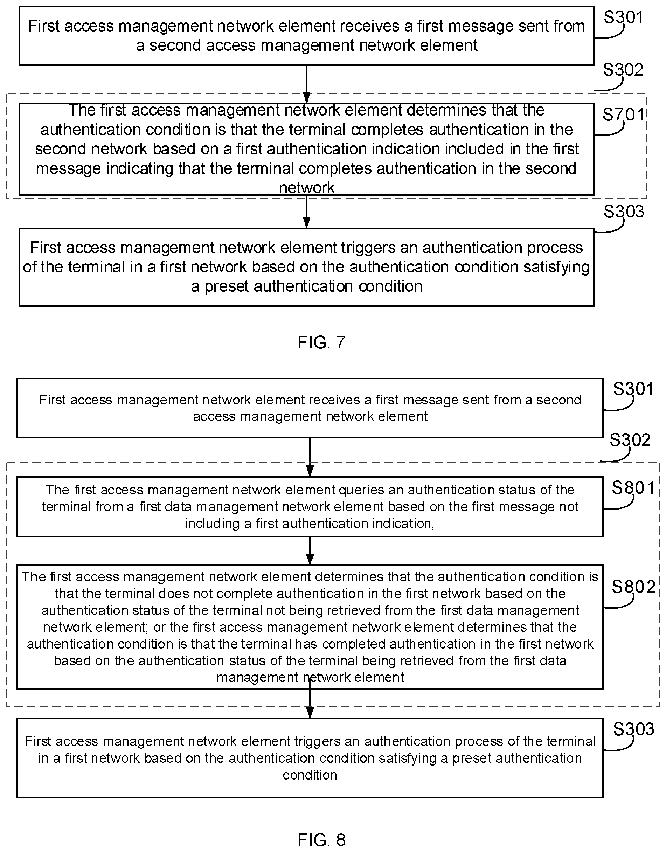

In some embodiments, the above preset authentication condition is that the terminal completes authentication in the second network. With reference to FIG. 3, as shown in FIG. 7, the above determination of the authentication condition of the terminal by the first access management network element based on the first message includes S701.

In S701: based on the first authentication indication included in the first message indicating that the terminal completes authentication in the second network, the first access management network element determines that the authentication condition is that the terminal completes authentication in the second network.

The first authentication indication is used to indicate that the terminal completes authentication in the second network or that the terminal does not complete authentication in the second network.

It should be understood that, when the first authentication indication included in the first message indicates that the terminal completes authentication in the second network, the first access management network element may determine that the authentication condition is that the terminal completes authentication in the second network.

It can be understood that, the preset authentication condition is that the terminal completes authentication in the second network, which indicates that the terminal has an authority to be served by the second access management network element. However, the terminal does not complete authentication in the first network, that is, the terminal may be an abnormal terminal. If the first access management network element provides the service for the terminal, it may bring a security risk to the first network. Therefore, after the first access management network element determines that the authentication condition is that the terminal completes authentication in the second network, the first access management network element may further determine that the authentication condition satisfies the preset authentication condition.

In some embodiments, the process of the terminal completing authentication in the second network is completed based on the second access management network element and a second authentication service network element, and the second authentication service network element belongs to the second network.

In some embodiments, the first authentication indication is stored by the second access management network element or acquired by the second access management network element from the second data management network element.

In the embodiments of the present disclosure, based on the first authentication indication included in the first message indicating that the terminal completes authentication in the second network, the first access management network element determines that the authentication condition is that the terminal completes authentication in the second network. In this way, the first access management network element can accurately determine the authentication condition of the terminal, and because the preset authentication condition is that the terminal completes authentication in the second network, the first access management network element can determine that the authentication condition satisfies the preset authentication condition, thereby triggering the authentication process of the terminal in the first network.

Manner 2: determining the authentication condition of the terminal based on the first data management network element when the first message does not include the first authentication indication.

In some embodiments, the above preset authentication condition is that the terminal does not complete authentication in the first network. With reference to FIG. 3, as shown in FIG. 8, the above determination of the authentication condition of the terminal by the first access management network element based on the first message includes S801 and S802.

In S801: based on the first message not including the first authentication indication, the first access management network element queries the authentication status of the terminal from the first data management network element.

The first authentication indication is used to indicate that the terminal completes authentication in the second network or that the terminal does not complete authentication in the second network, and the first data management network element belongs to the first network.

It should be understood that the first data management network element is used to store authentication status information of a terminal that has passed the authentication of the first network, and when the first message does not include the first authentication indication, the first access management network element may query the authentication status of the terminal from the first data management network element.

In an exemplary implementation, the querying of the authentication status of the terminal by the first access management network element from the first data management network element includes that: the first access management network element sends an authentication check message (or an access management registration message) to the first data management network element; the first data management network element sends an authentication check response message (or an access management registration response message) to the first access management network element, the authentication check response message (or the access management registration response message) includes the authentication status information of the terminal in the first network, and the authentication status information may be one of authentication failed and authentication passed (or may be one of authentication failed, authentication passed, and unauthenticated).

In S802: the first access management network element determines that the authentication condition is that the terminal does not complete authentication in the first network based on the authentication status of the terminal not being retrieved from the first data management network element; or, the first access management network element determines that the authentication condition is that the terminal has completed authentication in the first network based on the authentication status of the terminal being retrieved from the first data management network element.

It should be understood that, when the first access management network element retrieve no authentication status of the terminal from the first data management network element, it indicates that the terminal is a terminal not authenticated by the first network, and at this time, the first access management network element determines that the authentication condition is that the terminal does not complete authentication in the first network; when the first access management network element can retrieve the authentication status of the terminal from the first data management network element, it indicates that the terminal has been authenticated by the first network, and at this time, the first access management network element determines that the authentication condition is that the terminal has completed authentication in the first network. In this way, when the first message does not include the first authentication indication, the first access management network element can determine the authentication condition of the terminal based on retrieving the authentication status of the terminal from the first data management network element. And, because the preset authentication condition is that the terminal does not complete authentication in the first network, the first access management network element can reliably determine whether the authentication condition satisfies the preset authentication condition, and further, the first access management network element can determine whether to trigger the authentication process of the terminal in the first network.

Manner 3: determining the authentication condition of the terminal based on the second data management network element when the first message does not include the first authentication indication.

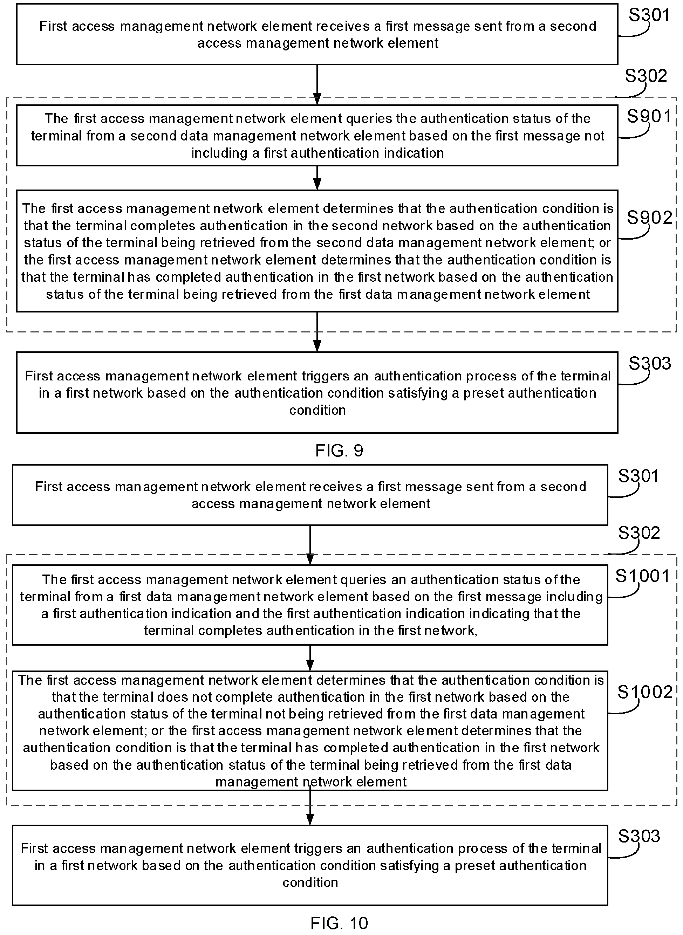

In some embodiments, the above preset authentication condition is that the terminal completes authentication in the second network. With reference to FIG. 3, as shown in FIG. 9, the above determination of the authentication condition of the terminal by the first access management network element based on the first message includes S901 and S902.

In S901: the first access management network element queries the authentication status of the terminal from the second data management network element based on the first message not including the first authentication indication.

The first authentication indication is used to indicate that the terminal completes authentication in the second network or that the terminal does not complete authentication in the second network, and the second data management network element belongs to the second network.

In S902: the first access management network element determines that the authentication condition is that the terminal completes authentication in the second network based on the authentication status of the terminal being retrieved from the second data management network element; or, the first access management network element determines that the authentication condition is that the terminal has completed authentication in the first network based on the authentication status of the terminal being retrieved from the first data management network element.

In the embodiments of the present disclosure, based on the first message not including the first authentication indication, the first access management network element queries the authentication status of the terminal from the second data management network element, and the first access management network element determines that the authentication condition is that the terminal completes authentication in the second network based on the authentication status of the terminal being retrieved from the second data management network element; or, the first access management network element determines that the authentication condition is that the terminal has completed authentication in the first network based on the authentication status of the terminal being retrieved from the first data management network element. In this way, when the first message does not include the first authentication indication, the first access management network element may also query the authentication status of the terminal from the second data management network element to determine the authentication condition, and because the preset authentication condition is that the terminal completes authentication in the second network, the first access management network element can reliably determine whether the authentication condition satisfies the preset authentication condition, thereby determining whether to trigger the authentication process of the terminal in the first network.

Manner 4: determining the authentication condition of the terminal based on the first data management network element when the first authentication indication indicates that the terminal completes authentication in the first network.

In some embodiments, the above preset authentication condition is that the terminal does not complete authentication in the first network. With reference to FIG. 3, as shown in FIG. 10, the above determination of the authentication condition of the terminal by the first access management network element based on the first message includes S1001 and S1002.

In S1001: the first access management network element queries the authentication status of the terminal from the first data management network element based on the first message including the first authentication indication and the first authentication indication indicating that the terminal completes authentication in the first network.

The first authentication indication is used to indicate that the terminal completes authentication in the first network or that the terminal does not complete authentication in the first network; the first data management network element belongs to the first network.

It should be understood that, when the first authentication indication indicates that the terminal completes authentication in the first network, the first access management network element retrieves the authentication status of the terminal from the first data management network element to verify that the terminal has an authentication record in the first network, so as to avoid a security risk caused by the first access management network element directly providing the service for the terminal when the information that the terminal completes authentication in the first network sent from the second access management network element is a false message.

In S1002: the first access management network element determines that the authentication condition is that the terminal does not complete authentication in the first network based on the authentication status of the terminal not being retrieved from the first data management network element; or, the first access management network element determines that the authentication condition is that the terminal has completed authentication in the first network based on the authentication status of the terminal being retrieved from the first data management network element.

In the embodiments of the present disclosure, based on the first message including the first authentication indication and the first authentication indication indicating that the terminal completes authentication in the first network, the first access management network element queries the authentication status of the terminal from the first data management network element. Based on the authentication status of the terminal not being retrieved from the first data management network element, the first access management network element determines that the authentication condition is that the terminal does not complete authentication in the first network; based on the authentication status of the terminal being retrieved from the first data management network element, the first access management network element determines that the authentication condition is that the terminal has completed authentication in the first network. In this way, when the first authentication indication indicates that the terminal completes authentication in the first network, the first access management network element may acquire the authentication status of the terminal stored in the first data management network element from the authentication status of the terminal queried from the first data management network element, thereby determining the authentication condition. And, because the preset authentication condition is that the terminal does not complete authentication in the first network, the first access management network element can reliably determine whether the authentication condition satisfies the preset authentication condition, thereby determining whether to trigger the authentication process of the terminal in the first network.

Manner 5: determining the authentication condition of the terminal based on the first authentication service network element when the first authentication indication indicates that the terminal completes authentication in the first network.

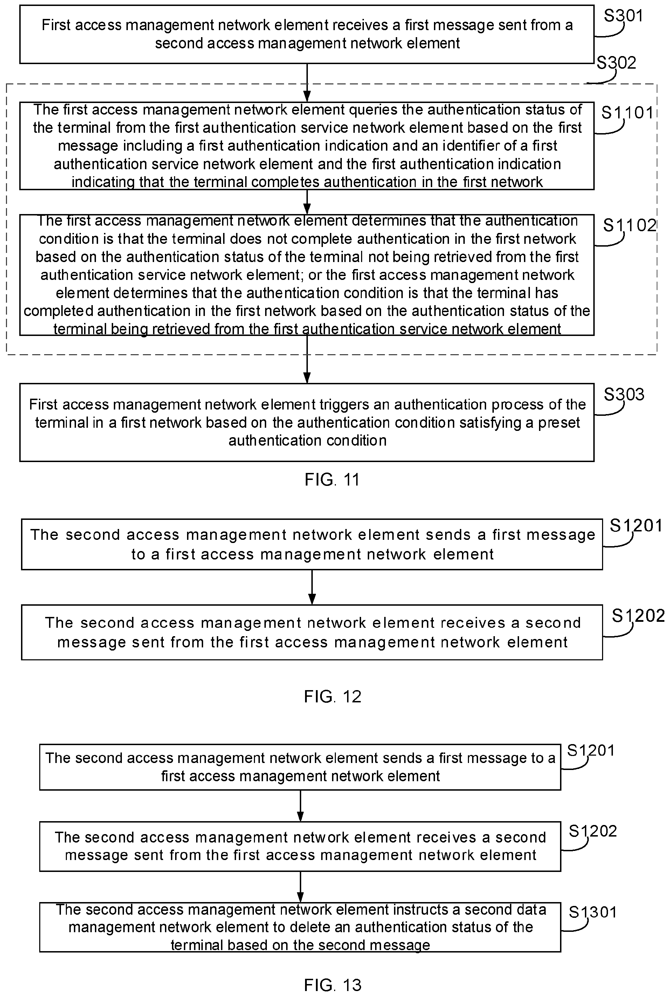

In some embodiments, the above preset authentication condition is that the terminal does not complete authentication in the first network. With reference to FIG. 3, as shown in FIG. 11, the above determination of the authentication condition of the terminal by the first access management network element based on the first message includes S1101 and S1102.

In S1101: the first access management network element queries the authentication status of the terminal from the first authentication service network element based on the first message including the first authentication indication and an identifier of the first authentication service network element, and the first authentication indication indicating that the terminal completes authentication in the first network.

The first authentication indication is used to indicate that the terminal completes authentication in the first network or that the terminal does not complete authentication in the first network, and the first authentication service network element belongs to the first network.

It should be understood that, when the terminal is the one for which the second access management network element completes the authentication process of the terminal on the first network through the first authentication service network element, the first authentication indication sent from the second access management network element to the first access management network element indicates that the terminal completes authentication in the first network. At this time, the first access management network element may query the authentication status of the terminal from the first authentication service network element based on the identifier of the first authentication service network element, to determine the authentication status of the terminal in the first network. In this way, verifying the information that the terminal completes authentication in the first network can reliably determine the authentication status of the terminal in the first network.

In S1102: the first access management network element determines that the authentication condition is that the terminal does not complete authentication in the first network based on the authentication status of the terminal not being retrieved from the first authentication service network element; or, the first access management network element determines that the authentication condition is that the terminal has completed authentication in the first network based on the authentication status of the terminal being retrieved from the first authentication service network element.

In the embodiments of the present disclosure, the first access management network element queries the authentication status of the terminal from the first authentication service network element based on the first message including the first authentication indication and the identifier of the first authentication service network element, and the first authentication indication indicating that the terminal completes authentication in the first network. The first access management network element determines that the authentication condition is that the terminal does not complete authentication in the first network based on the authentication status of the terminal not being retrieved from the first authentication service network element; or, the first access management network element determines that the authentication condition is that the terminal has completed authentication in the first network based on the authentication status of the terminal being retrieved from the first authentication service network element.

In some embodiments, the above first access management network element may belong to the first network or the second network. When the first access management network element belongs to the first network, data exchange may be performed between the first access management network element and various network elements in the first network. When the first access management network element belongs to the second network, the first access management network element may perform data exchange with various network elements in the second network under the condition that the first network and the second network are interconnected.

The communication method provided by the embodiments of the present disclosure may be applied to the first access management network element in the communication system shown in FIG. 1 or the third access management network element in the communication system shown in FIG. 2. FIG. 12 shows a schematic flowchart of an authentication method. As shown in FIG. 12, the authentication method at least includes S1201 and S1202.

In S1201: a second access management network element sends a first message to a first access management network element.

The first message is used to request that the first access management network element provide a service for a terminal.

In S1202: the second access management network element receives a second message sent from the first access management network element.

The second message is a response message to the first message.

It can be understood that, for the content of S1201, reference may be made to S301, and for the content of S1202, reference may be made to S601, and the embodiments of the present disclosure will not be repeated herein.

With reference to FIG. 12, as shown in FIG. 13, the authentication method provided by the embodiments of the present disclosure further includes S1301.

In S1301: the second access management network element instructs a second data management network element to delete an authentication status of the terminal based on the second message.

The second data management network element belongs to the second network.

It should be understood that, when the second access management network element receives the second message, it indicates that the terminal has gone through the authentication process of the first network. At this time, the second data management network element deletes the authentication status of the terminal. In this way, storage resources of the second data management network element can be saved. Meanwhile, after the second data management network element deletes the authentication status of the terminal, the inability to retrieve the authentication status of the terminal on the second data management network element may also serve as judgment information and play a role in certain processes.

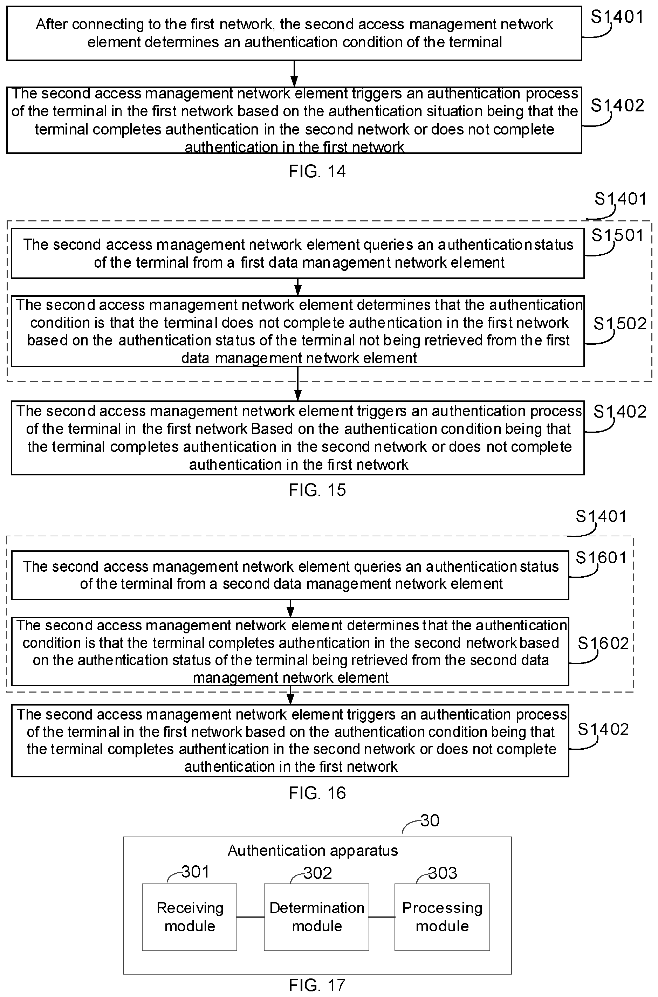

FIG. 14 shows a schematic flowchart of another authentication method applied to the first access management network element in the communication system shown in FIG. 1 or the third access management network element in the communication system shown in FIG. 2. As shown in FIG. 14, the authentication method at least includes S1401 and S1402.

In S1401: after connecting to the first network, the second access management network element determines an authentication condition of the terminal.

It should be understood that, after the second access management network element connects to any network element in the first network, it is considered that the second access management network element connects to the first network.

In some embodiments, the second access management network element starts a timer, and periodically queries whether the first network is connected based on the timer.

In S1402: the second access management network element triggers an authentication process of the terminal in the first network based on the authentication condition being that the terminal completes authentication in the second network or does not complete authentication in the first network.

It should be understood that, when the terminal completes authentication in the second network or does not complete authentication in the first network, it indicates that there may be a security risk for the first access management network element to provide a service for the terminal. At this time, the second access management network element triggers the authentication process of the terminal in the first network. In this way, when the terminal completes authentication in the second network or does not complete authentication in the first network, the second access management network element triggers the authentication process of the terminal in the first network, so that the first network authenticates the terminal, so as to ensure the network security of the first network when the terminal accesses the first network.

The above determination of the authentication condition of the terminal by the second access management network element after connecting to the first network may be implemented in multiple manners, and the multiple manners will be described below. For example, the multiple manners include the following two manners: manner 1: the second access management network element determines the authentication condition of the terminal based on the first data management network element; manner 2: the second access management network element determines the authentication condition of the terminal based on the second data management network element.

Manner 1: the second access management network element determines the authentication condition of the terminal based on the first data management network element.

In some embodiments, with reference to FIG. 14, as shown in FIG. 15, the above determination of the authentication condition of the terminal includes S1501 and S1502.

In S1501: the second access management network element queries an authentication status of the terminal from the first data management network element.

The first data management network element belongs to the first network.

In S1502: the second access management network element determines that the authentication condition is that the terminal does not complete authentication in the first network based on the authentication status of the terminal not being retrieved from the first data management network element.

In the embodiments of the present disclosure, the second access management network element queries the authentication status of the terminal from the first data management network element. Based on the authentication status of the terminal not being retrieved from the first data management network element, the second access management network element determines that the authentication condition is that the terminal does not complete authentication in the first network. In this way, the second access management network element can accurately and quickly determine the authentication condition of the terminal through the first data management network element.

Manner 2: the second access management network element determines the authentication condition of the terminal based on the second data management network element.

In some embodiments, with reference to FIG. 14, as shown in FIG. 16, the above determination of the authentication condition of the terminal includes S1601 and S1602.

In S1601: the second access management network element queries the authentication status of the terminal from the second data management network element.

The second data management network element belongs to the second network.

In S1602: the second access management network element determines that the authentication condition is that the terminal completes authentication in the second network. based on the authentication status of the terminal being retrieved from the second data management network element.

In the embodiments of the present disclosure, the second access management network element queries the authentication status of the terminal from the second data management network element. Based on the authentication status of the terminal being retrieved from the second data management network element, the second access management network element determines that the authentication condition is that the terminal completes authentication in the second network. In this way, the second access management network element can quickly determine the authentication status of the terminal through the second data management network element.

It can be understood that, in order to implement the above functions, the authentication apparatus includes corresponding hardware structures and/or software modules for executing the various functions. Those skilled in the art should easily realize that, with reference to the algorithm steps of the examples described in the embodiments of the present disclosure, the present disclosure can be implemented in a form of hardware or a combination of hardware and computer software. Whether a function is executed in a manner of hardware or computer software driving hardware depends on the specific application and design constraint conditions of the technical solution. Professional technicians may use different methods for each specific application to implement the described functions, but such implementation should not be considered as going beyond the scope of the present disclosure.

In the embodiments of the present disclosure, functional module division may be performed on the authentication apparatus according to the above method embodiments. For example, each functional module may be divided corresponding to each function, or two or more functions may be integrated into one functional module. The above integrated module may be implemented in a form of hardware, or may be implemented in a form of software. It should be noted that the division of modules in the embodiments of the present disclosure is illustrative, and is only a logical function division. In actual implementation, there may be other division manners. The following description will be given by taking the example of dividing each functional module corresponding to each function.

FIG. 17 is a structural schematic diagram of an authentication apparatus according to the embodiments of the present disclosure, and the authentication apparatus may execute the authentication method provided by the above method embodiments. As shown in FIG. 17, an authentication apparatus 30, applied to a first access management network element, includes: a receiving module 301, a determination module 302, and a processing module 303.

The receiving module 301 is configured to receive a first message sent from a second access management network element. The first message is used to request that the first access management network element provide a service for a terminal. The second access management network element belongs to a second network.

The determination module 302 is configured to determine an authentication condition of the terminal based on the first message.

The processing module 303 is configured to, based on the authentication condition being that the terminal completes authentication in the second network or does not complete authentication in the first network, trigger an authentication process of the terminal in the first network.

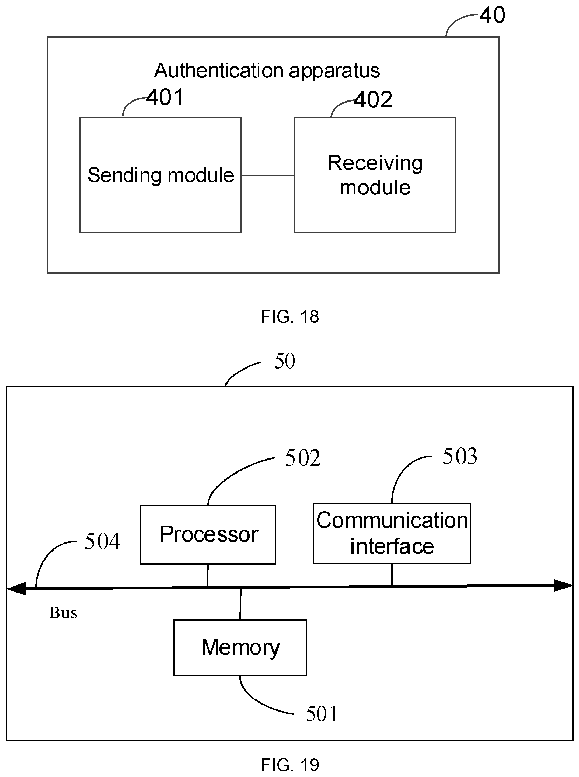

FIG. 18 is a structural schematic diagram of another authentication apparatus according to the embodiments of the present disclosure, and the authentication apparatus may execute the authentication method provided by the above method embodiments. As shown in FIG. 18, an authentication apparatus 40, applied to a second access management network element, the second access management network element belongs to a second network. The authentication apparatus 40 includes: a sending module 401 and a receiving module 402.

The sending module 401 is configured to send a first message to a first access management network element. The first message is used to request that the first access management network element provide a service for a terminal.

The receiving module 402 is configured to receive a second message sent from the first access management network element. The second message is a response message to the first message.

When the functions of the above integrated modules are implemented in a form of hardware, the embodiments of the present disclosure provide another structure of the communication apparatus involved in the above embodiments. As shown in FIG. 19, the communication apparatus 50 includes: a processor 502 and a bus 504. In some embodiments, the communication apparatus may further include a memory 501. In some embodiments, the communication apparatus may further include a communication interface 503.

The processor 502 may be a device that implements or executes various exemplary logical blocks, modules, and circuits described in combination with the embodiments of the present disclosure. The processor 502 may be a central processing unit, a general-purpose processor, a digital signal processor, an application specific integrated circuit, a field programmable gate array or other programmable logic devices, a transistor logic device, a hardware component, or any combination thereof, which may implement or execute various exemplary logical blocks, modules, and circuits described in combination with the embodiments of the present disclosure. The processor 502 may also be a combination for implementing computing functions, for example, a combination including one or more microprocessors, a combination of a DSP (digital signal processor) and a microprocessor, and the like.

The communication interface 503 is configured to connect to other devices through a communication network. The communication network may be Ethernet, a radio access network, a wireless local area network (WLAN), and the like.

The memory 501 may be a read-only memory (ROM) or other types of static storage devices capable of storing static information and instructions, a random access memory (RAM) or other types of dynamic storage devices capable of storing information and instructions, or may be an electrically erasable programmable read-only memory (EEPROM), a magnetic disk storage medium or other magnetic storage devices, or any other medium capable of carrying or storing desired program codes in the form of instructions or data structures and accessible by a computer, but is not limited thereto.

As an implementation, the memory 501 may exist independently of the processor 502. The memory 501 may be connected to the processor 502 through the bus 504, and is configured to store instructions or program codes. When the processor 502 calls and executes the instructions or program codes stored in the memory 501, the authentication method provided by the embodiments of the present disclosure can be implemented.

In another implementation, the memory 501 may also be integrated with the processor 502.

The bus 504 may be an extended industry standard architecture (EISA) bus, or the like. The buses 504 may be categorized into an address bus, a data bus, a control bus, and the like. For ease of representation, only one thick line is used in FIG. 19, but this does not mean that there is only one bus or one type of bus.

Some embodiments of the present disclosure provide a computer-readable storage medium (e.g., a non-transitory computer-readable storage medium). The computer-readable storage medium stores computer program instructions, and upon the computer program instructions being run on a computer, the computer is enabled to execute the authentication method as described in any one of the above embodiments.

Exemplarily, the above computer-readable storage medium may include, but is not limited to: magnetic storage devices (for example, a hard disk, a floppy disk, or a magnetic tape, etc.), optical disks (for example, a compact disk (CD), a digital versatile disk (DVD), etc.), smart cards, and flash memory devices (for example, an erasable programmable read-only memory (EPROM), a card, a stick, or a key driver, etc.). Various computer-readable storage media described in the present disclosure may represent one or more devices and/or other machine-readable storage media for storing information. The term "machine-readable storage medium" may include, but is not limited to, wireless channels and various other media capable of storing, containing, and/or carrying instructions and/or data.

The embodiments of the present disclosure provide a computer program product containing instructions, and upon the computer program product being run on a computer, the computer is enabled to execute the authentication method as described in any one of the above embodiments.

The above description is only specific implementations of the present disclosure, but the scope of protection of the present disclosure is not limited thereto. Any change or replacement within the technical scope disclosed by the present disclosure shall be covered within the scope of protection of the present disclosure. Therefore, the scope of protection of the present disclosure shall be subject to the scope of protection of the claims.

## Claims

1. An authentication method, applied to a first access management network element, comprising:
receiving a first message sent from a second access management network element; wherein the first message is used to request that the first access management network element provides a service for a terminal; and the second access management network element belongs to a second network;
determining an authentication condition of the terminal based on the first message; and
triggering an authentication process of the terminal in a first network based on the authentication condition satisfying a preset authentication condition.

2. The method according to claim 1, further comprising:
after the authentication process of the terminal in the first network is completed, sending a second message to the second access management network element, wherein the second message is a response message to the first message.

3. The method according to claim 1, wherein the preset authentication condition is that the terminal completes authentication in the second network, and determining the authentication condition of the terminal based on the first message comprises:
determining that the authentication condition is that the terminal completes authentication in the second network based on a first authentication indication included in the first message indicating that the terminal completes authentication in the second network; wherein the first authentication indication is used to indicate that the terminal completes authentication in the second network or that the terminal does not complete authentication in the second network.

4. The method according to claim 1, wherein the preset authentication condition is that the terminal does not complete authentication in the first network, and determining the authentication condition of the terminal based on the first message comprises:
querying an authentication status of the terminal from a first data management network element based on the first message not including a first authentication indication; wherein the first authentication indication is used to indicate that the terminal completes authentication in the second network or that the terminal does not complete authentication in the second network, and the first data management network element belongs to the first network;
determining that the authentication condition is that the terminal does not complete authentication in the first network based on the authentication status of the terminal not being retrieved from the first data management network element; or
determining that the authentication condition is that the terminal has completed authentication in the first network based on the authentication status of the terminal being retrieved from the first data management network element.

5. The method according to claim 1, wherein the preset authentication condition is that the terminal completes authentication in the second network, and determining the authentication condition of the terminal based on the first message comprises:
querying an authentication status of the terminal from a second data management network element based on the first message not including a first authentication indication; wherein the first authentication indication is used to indicate that the terminal completes authentication in the second network or that the terminal does not complete authentication in the second network, and the second data management network element belongs to the second network;
determining that the authentication condition is that the terminal completes authentication in the second network based on the authentication status of the terminal being retrieved from the second data management network element; or determining that the authentication condition is that the terminal has completed authentication in the first network based on the authentication status of the terminal being retrieved from a first data management network element.

6. The method according to claim 1, wherein the preset authentication condition is that the terminal does not complete authentication in the first network, and determining the authentication condition of the terminal based on the first message comprises:
querying, by the first access management network element, an authentication status of the terminal from a first data management network element based on the first message including a first authentication indication and the first authentication indication indicating that the terminal completes authentication in the first network; wherein the first authentication indication is used to indicate that the terminal completes authentication in the first network or that the terminal does not complete authentication in the first network; and the first data management network element belongs to the first network;
determining that the authentication condition is that the terminal does not complete authentication in the first network based on the authentication status of the terminal not being retrieved from the first data management network element; or determining that the authentication condition is that the terminal has completed authentication in the first network based on the authentication status of the terminal being retrieved from the first data management network element.

7. The method according to claim 1, wherein the preset authentication condition is that the terminal does not complete authentication in the first network, and determining the authentication condition of the terminal based on the first message comprises:
querying an authentication status of the terminal from the first authentication service network element based on the first message including a first authentication indication and an identifier of a first authentication service network element and the first authentication indication indicating that the terminal completes authentication in the first network; wherein the first authentication indication is used to indicate that the terminal completes authentication in the first network or that the terminal does not complete authentication in the first network; and the first authentication service network element belongs to the first network;
determining that the authentication condition is that the terminal does not complete authentication in the first network based on the authentication status of the terminal not being retrieved from the first authentication service network element; or determining that the authentication condition is that the terminal has completed authentication in the first network based on the authentication status of the terminal being retrieved from the first authentication service network element.

8. The method according to claim 1, wherein the first access management network element belongs to the first network or the second network.

9. An authentication method, applied to a second access management network element, the second access management network element belonging to a second network, wherein the method comprises:
sending a first message to a first access management network element, wherein the first message is used to request that the first access management network element provides a service for a terminal; and
receiving a second message sent from the first access management network element, wherein the second message is a response message to the first message.

10. The method according to claim 9, wherein the first message comprises a first authentication indication, and the first authentication indication is used to indicate that the terminal completes authentication in the second network or that the terminal does not complete authentication in the second network.

11. The method according to claim 9, wherein the first message further comprises an identifier of a first authentication service network element, and the first authentication service network element belongs to a first network.

12. The method according to claim 9, further comprising:
instructing a second data management network element to delete an authentication status of the terminal based on the second message; wherein the second data management network element belongs to the second network.

13. An authentication method, applied to a second access management network element, the second access management network element belonging to a second network, wherein the method comprises:
after connecting to a first network, determining an authentication condition of a terminal; and
triggering an authentication process of the terminal in the first network based on the authentication condition being that the terminal completes authentication in the second network or does not complete authentication in the first network.

14. The method according to claim 13, wherein determining the authentication condition of the terminal comprises:
querying an authentication status of the terminal from a first data management network element, wherein the first data management network element belongs to the first network; and
determining that the authentication condition is that the terminal does not complete authentication in the first network based on the authentication status of the terminal not being retrieved from the first data management network element.

15. The method according to claim 13, wherein determining the authentication condition of the terminal comprises:
querying an authentication status of the terminal from a second data management network element, wherein the second data management network element belongs to the second network; and
determining that the authentication condition is that the terminal completes authentication in the second network based on the authentication status of the terminal being retrieved from the second data management network element.

16. A communication apparatus, comprising: a memory and a processor; wherein the memory is coupled to the processor; the memory is configured to store instructions executable by the processor; and the processor, upon executing the instructions, performs the method according to any one of claims 1 to 8, or the method according to any one of claims 9 to 12, or the method according to any one of claims 13 to 15.

17. A computer-readable storage medium, wherein the computer-readable storage medium has computer instructions stored thereon, and upon the computer instructions being run on a computer, the computer is enabled to execute the method according to any one of claims 1 to 8, or the method according to any one of claims 9 to 12, or the method according to any one of claims 13 to 15.

18. A computer program product, wherein the computer program product comprises computer program instructions, and the computer program instructions, upon being executed by a processor, enable the processor to execute the method according to any one of claims 1 to 8, or the method according to any one of claims 9 to 12, or the method according to any one of claims 13 to 15.
